# EUROPEAN PATENT SPECIFICATION

(11) **EP 3 628 886 B1**
(45) Date of publication and mention of the grant of the patent: **12.05.2021**
(21) Application number: 19199280.9
(22) Date of filing: 24.09.2019
(51) Int. Cl.: F16D 55/40

(54) **FRICTION DISCS WITH ANGLED STATOR LUGS**
REIBSCHEIBEN MIT WINKELSTATORLASCHEN
DISQUES DE FRICTION COMPORTANT DES ERGOTS DE STATOR EN BIAIS

(30) Priority: 26.09.2018 US 201816142808
(43) Date of publication of application: 01.04.2020
(73) Proprietor: Goodrich Corporation, Charlotte, NC 28217-4578 (US)
(72) Inventor: STEVENSON, John A., Beavercreek, OH 45431 (US); HERRMANN, Nathaniel J., Springfield, OH 45502 (US)
(74) Representative: Dehns

(56) References cited:
- US-A- 3 983 974
- US-B1- 9 366 302

## Description

### BACKGROUND OF THE INVENTION

### 1. Technical Field

The present disclosure relates to aircraft brake systems, and more particularly to an aircraft brake system with angled stator lugs.

### 2. Background Information

Conventional aircraft brake assemblies comprise rotating and stationary discs that slow an aircraft upon landing. Stationary friction discs splined to a non-rotating torque tube are interspersed with rotating friction discs splined to the rotating wheel. The friction discs withstand and dissipate the heat generated from contact between one another during braking. During high speed landings and rejected takeoffs ("RTOs") a significant amount of heat and force are generated. There is a need for an improved friction disc brake system. Disc brake systems are disclosed in US 3, 983, 974 and US 9, 366, 302.

### SUMMARY OF THE DISCLOSURE

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a multiple disc brake system as defined by claim 1.

Each of the plurality of circumferential stator lugs may comprise beveled axial edges.

The tapered side walls may taper 1° to 45° inwardly with respect to a radial axis.

The tapered side walls may taper inwardly 5° to 15°.

The torque tube may comprise a plurality of stator splines that each engage an associated one of the plurality of stator lugs to prevent the stator discs from rotating in response to a torque being applied to the stator discs during braking.

Each of the plurality of stator lugs may comprise a planar tip surface at a distal end of the stator lug.

Each of the plurality of stator lugs may comprise a tip surface having a radii at a distal end of the stator lug.

Each of the plurality of stator lugs may comprise a tip surface having a chamfer at a distal end of the stator lug.

At least one piston may axially move the rotor discs into engagement with axially adjacent one of the stator discs. Each of the stator discs includes a plurality of circumferential stator lugs that secure the stator discs to the torque tube, where each of the plurality of circumferential stator lugs each comprise tapered side walls that taper inwardly transverse to the axially extending torque tube.

[DELETED]

[DELETED]

[DELETED]

[DELETED]

[DELETED]

[DELETED]

[DELETED]

[DELETED]

### BRIEF DESCRIPTION OF THE DRAWINGS

FIG. 1 illustrates a multi-disc brake according to the invention;
FIG. 2 illustrates a perspective view of a stator illustrated in the multi-disc brake system illustrated in FIG. 1;
FIG. 3 illustrates a cutaway view of the stator illustrated in FIG. 2; and
FIG. 4 is a pictorial illustration of a tapered stator lug.

### DETAILED DESCRIPTION

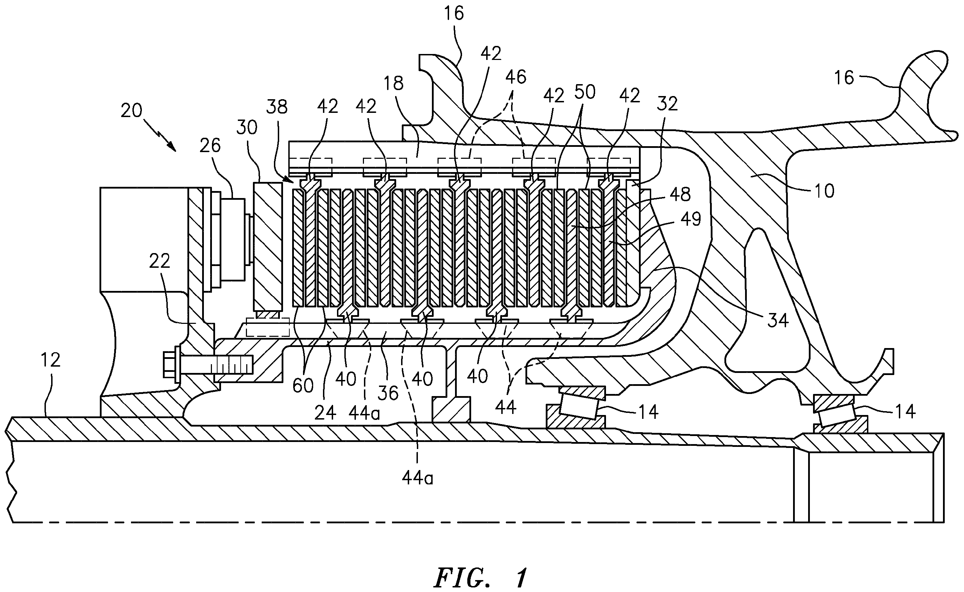

FIG. 1 illustrates a multi-disc brake system 20. The system may include a wheel 10 supported for rotation around an axle 12 by bearings 14. The axle 12 defines an axis of the multi-disc brake system 20 and the various components thereof described herein, and any reference to the terms axis and axial may include an axis of rotation defined by the axle 12 or a dimension parallel to such axis. The wheel 10 includes rims 16 for supporting a tire (not shown), and a series of axially extending rotor splines 18 (one shown). Rotation of the wheel 10 is modulated by the multi-disc brake system 20, which includes a piston housing 22, torque tube 24, a plurality of pistons 26 (one shown), pressure plate 30, and end plate 32. The torque tube 24 may be an elongated annular structure that includes a reaction plate 34 and a series of axially extending stator splines 36 (one shown). The reaction plate 34 and stator splines 36 may be integral with the torque tube 24 as shown in FIG. 1, or attached as separate components.

The brake system 20 also includes a plurality of friction discs 38, each of which may comprise a friction disc core. The plurality of friction discs 38 (also referred to as annular disk stack) may include at least one friction disc 40 with a non-rotatable core, also known as a stator 40, and at least one friction disc with a rotatable core, also known as a rotor 42. The stators 40 and the rotors 42 may be located adjacent to one another in the multi-disc brake system 20, forming a plurality of adjacent stator-rotor pairs. The stators 40 may comprise a stator core 48 and floating stator wear liners 50. The rotors 42 may comprise a rotor core 49 and floating rotor wear liners 60. Of course, the brake system may include a stator disk and a rotor disk comprised of one component made entirely of a single component (e.g., carbon) rather than a core and a liner. Referring still to FIG. 1, each friction disc 38 includes an attachment structure. For example, each of the stators 40 may include a plurality of stator lugs 44 at circumferentially spaced positions around the stator 40 as an attachment structure. Similarly, each of the rotors 42 may include a plurality of rotor lugs 46 at circumferentially spaced positions around the rotor 42 as an attachment structure. The pressure plate 30, end plate 32, and friction discs 38 are all annular structures, which may be made for example from a carbon composite material. The stator lugs 44 may include angled sidewalls that are tapered inwardly in the direction of the torque tube 24. The stator lugs 44 may also include beveled axial edges 44b. The taper improves the strength of the stator lug. The taper may be about 1° to 45°, preferably about 5° - 15°.

The piston housing 22 is mounted to the axle 12. The torque tube 24 may be bolted to the piston housing 22 such that the reaction plate 34 is near an axial center of the wheel 10. The end plate 32 is connected to a surface of the reaction plate 34 facing axially inward. Thus, the end plate 32 is non-rotatable by virtue of its connection to the torque tube 24. The stator splines 36 support the pressure plate 30 so that the pressure plate is also non-rotatable. The stator splines 36 also support the stators 40 via the stator cores 48. The stator cores 48 engage the stator splines 36 with gaps formed between the stator lugs 44. Similarly, the rotors 42 engage the rotor splines 18 via a rotor core 49 with gaps formed between the rotor lugs 46. Thus, the rotor cores 49 of the rotors 42 are rotatable by virtue of their engagement with the rotor splines 18 of the wheel 10.

Referring still to FIG. 1, the rotors 42 with the rotor cores 49 are arranged with the end plate 32 on one end, the pressure plate 30 on the other end, and the stators 40 with the stator cores 48 interleaved so that the rotors 42 with the rotor cores 49 are directly or indirectly adjacent to non-rotatable friction components. Pistons 26 are connected to the piston housing 22 at circumferentially spaced positions around the piston housing 22. The pistons 26 face axially toward the wheel 10 and contact a side of the pressure plate 30 opposite the rotors 42 with the rotor cores 49. The pistons 26 may be powered electrically, hydraulically, or pneumatically.

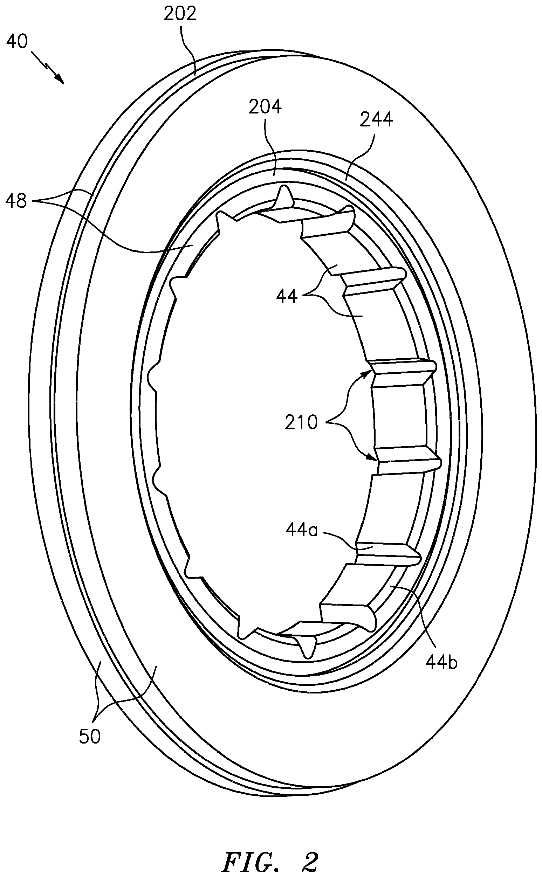

FIG. 2 illustrates a perspective view of the stator 40 illustrated in the multi-disc brake system illustrated in FIG. 1. Referring now to FIG. 2, the stator 40 may comprise a stator core 48 and floating stator wear liners 50. The stator core 48 and wear liners 50 may comprise different materials. For example, the stator core 48 may comprise a first material such as steel, and the wear liners 50 may comprise a second material such as a carbon composite material. However, the stator core 48 and the stator wear liners 50 may comprise the same material, such as a carbon composite material. The material of the stator core 48 may be selected for its structural properties, thermal conductivity, heat capacity, and/or oxidation resistance properties. For example, the stator core 48 may comprise silicon carbide or titanium. A material of the floating stator wear liners 50 may be selected for its wear resistance and/or frictional properties.

The stator core 48 may comprise a spine 202 and an inner core 204. The inner core 204 may comprise the angled/tapered stator lugs 44. The inner core 204 may also comprise stator gaps 210 between an inner portion of the stator lugs 44. The stator gaps 210 with tapered sidewalls may be located to align with the stator splines 36. The engagement between the stator splines 36 and the stator lugs 44 prevents the stator core 48 from rotating in response to a torque being applied to the stator 40 during braking. The stator core 48 may also include a stator retention ring 244 that is located at a radially outer portion of the inner core 204. The stator retention ring 244 may comprise an annular feature extending axially from the stator core 48 relative to a contact surface plane of the stator core. The stator retention ring 244 may be substantially concentric with the stator core 48.

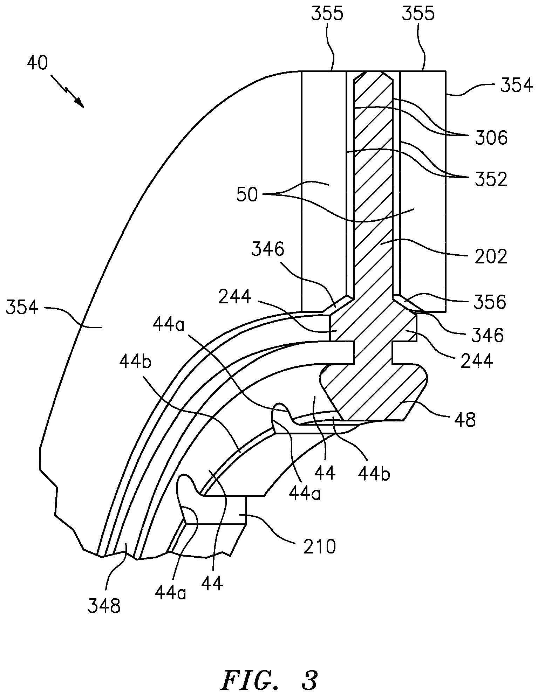

FIG. 3 illustrates a cutaway view of the stator illustrated in FIG. 2. Referring now to FIG. 3, the stator 40 may comprise the stator core 48, the stator lugs 44, stator gaps 210, the floating stator wear liners 50, and stator retention ring 244. The stator core 48 may have the stator retention rings 244 on both axial sides of the stator core. The stator retention ring 244 may be integral to the stator core 48, or the stator retention ring may be a separate component coupled to the stator core 48. The stator retention rings 244 may project axially from the stator core 48 relative to a plane defined by stator contact surface 306. That is, each stator contact surface 306 may comprise a contact surface that defines a contact surface plane. The stator retention ring 244 may comprise a cross section defined in part by a radially outer wall 346 with an orientation that is not substantially parallel to the axis of the stator core 48, and instead is angled relative to the axis of the stator core 48 (i.e., an angled outer wall). The outer wall 346 may comprise a plurality of wall segments with different orientations, and may include a wall segment that is substantially parallel to the axis of the stator core 48 in addition to an angled retention ring wall segment. The angled retention ring wall segment may define a centration surface. A radially inner wall 348 of the stator retention ring 244 may define the stator retention ring as a feature of the inner core 204 distinct from the stator lugs 44. However, other stator retention ring cross-sectional profiles are possible and a stator retention ring and stator lugs need not comprise distinct structural features of the inner core 204. For example, the stator lugs 44 and the stator retention ring 244 may be integral, with the inner core 204 comprising a lug portion defined at an outer radial edge by the outer wall 346.

Referring still to FIG. 3, the stator lugs 44 may include the angled sidewalls 44a, which are tapered inwardly generally extending in the radial inward direction. The stator lugs 44 may also include beveled axial edges 44b. The tapered sidewalls 44a reduce stress on various components, and may allow the lugs to have a reduced height in comparison to the prior art. For example, the height reduction may be about 0.3 - 10%, depending on angle of the taper being about 5 - 25%.

The retention ring 244 of the stator may have an identical or substantially similar configuration. For example, the stator core 48 may be bilaterally symmetrical in a transverse cross-section, as illustrated, with the stator retention rings 244 having substantially similar cross sections and stator retention ring outer diameters. This may enable interchangeable use of the wear liners 50 on either side of the stator core 48.

The outer wall 346 may define a centration surface of the stator retention ring 244. The centration surface may be defined by the outer wall 346 that may have a substantially frustoconical profile, with the radial diameter of the outer wall 346 of the stator retention ring 244 decreasing from a maximum radius at the base of the outer wall 346 where the wall intersects the stator contact surface 306 to a minimum radius at a maximum first angled outer wall axial distance from the contact surface 306 (i.e., the point of maximum axial distance of the outer wall 346 from the stator contact surface 306).

The wear liner 50 may comprise an annular ring configured to contact the stator core 48. Each wear liner 50 may have a first primary wear surface 352 and a second primary wear surface 354 opposite the first primary wear surface. The first primary wear surface 352 may contact stator contact surface 306. The second primary wear surface 354 may contact an adjacent friction component of a multi-disc brake system, such as rotor 42. The floating stator wear liners 50 may comprise a substantially uniform thickness in an axial dimension. Each floating stator wear liner 50 may further comprise walls extending between primary wear surfaces 352 and 354. An exterior wall 355 defines an outside diameter and an interior wall 356 defines a secondary wear surface. The interior wall 356 that defines the secondary wear surface may have a profile and dimensions complementary to the profile and dimensions of the outer wall 346 and be configured to receive the outer wall 346 of stator retention ring 244, thereby permitting the floating stator wear liner 50 to be fitted about the outer wall 346. When fitted about the outer wall 346, the first primary wear surface 352 may be in contact with the stator contact surface 306, and the secondary wear surface defined by the interior wall 356 may be in contact with the centration surface of the outer wall 346.

During aircraft braking, a torque may be applied to the wear liners 50. For example, and with reference now also to FIG. 1, a torque may be applied by an adjacent rotatable brake system component, such as the rotor 42 with a rotor core 49, during braking of a moving aircraft. The torque may cause a shear force that, in the absence of a counteracting force, acts to rotate the wear liners 50 relative to the stator core 48. Contact between the stator contact surface 306 and the first primary wear surface 352 may counteract an applied torque. Contact between the centration surface of the outer wall 346 and the secondary wear surface defined by the interior wall 356 may also contribute to counteracting the applied torque. Because each wear liner 50 may rotate with respect to the outer wall 346 and the stator core 48, a frictional force may be produced between the stator contact surface 306 and the first primary wear surface 352 and between the outer wall 346 and the interior wall 356 in response to an applied torque with rotation of the wear liner 50 and contact between the stator contact surface 306 and the first primary wear surface 352 and between the outer wall 346 and the interior wall 356. The frictional resistance to rotation produced by contact between these surfaces may also limit rotation of each wear liner 50 relative to rotation of adjacent rotor 42, and may thereby produce a frictional force between the second primary wear surface 354 and the adjacent rotor. Again, while embodiments are discussed in the context of a brake system that includes liners, the tapered stator lugs may of course also be used on brake systems that do not include liners.

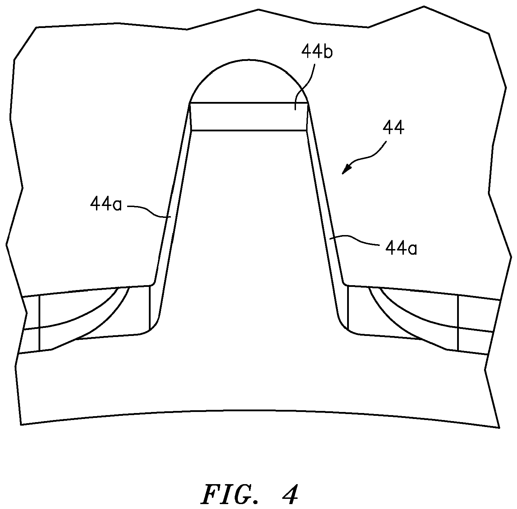

FIG. 4 is a pictorial illustration of the tapered stator lug 44. The lug includes angled (e.g., tapered) side walls 44a that terminate at a distal surface. The distal surface may include a beveled surface 44b (also see FIGs. 2-3).

It is contemplated that rather than a planar tip surface, the edges may have a radii or chamfers. This would be beneficial to keep sharp edges on the planar splines from edge loading the carbon stator lugs. For example, the entire tip may be a full radius, but such a tip may be difficult to machine.

## Claims

1. A multiple disc brake system, comprising:
an annular disc stack (38) that includes interleaved sets of rotor discs and stator discs;
an axially extending torque tube (24); and
an actuator that axially moves the rotor discs into engagement with an axially adjacent stator disc;
**characterised in that**:
each of the stator discs includes an inner core (204) that includes a plurality of circumferential arranged stator lugs (44) and a plurality of stator gaps (210) between inner portions of the plurality of circumferential arranged stator lugs (44), wherein the plurality of circumferential arranged stator lugs (44) secure the stator discs to the torque tube, wherein each of the plurality of circumferential stator lugs comprises tapered side walls on both sides of the stator gap (210) that taper inwardly transverse to the axially extending torque tube, and wherein the plurality of stator gaps (210) with the tapered side walls align with a plurality of stator splines (36) of the axially extending torque tube (24).

2. The multiple disc brake system of claim 1, where each of the plurality of circumferential stator lugs comprises beveled axial edges.

3. The multiple disc brake system of claim 2, where the tapered side walls taper inwardly 1° to 45° with respect to a radial axis.

4. The multiple disc brake system of claim 2, where the tapered side walls taper inwardly 5° to 15° with respect to a radial axis.

5. The multiple disc brake system of claim 2, where the torque tube comprises a plurality of stator splines that each engage an associated one of the plurality of stator lugs to prevent the stator discs from rotating in response to a torque being applied to the stator discs during braking.

6. The system, of any preceding claim, wherein the actuator comprises
at least one piston (26) that axially moves the rotor discs into engagement with axially adjacent one of the stator discs.

7. The system of claim 6, comprising a pressure plate (30) and an end plate (32) that sandwich the interleaved sets of rotor discs and stator discs, where the at least one piston axially moves the pressure plate.

8. The system of any preceding claim, where each of the plurality of stator lugs comprises a planar tip surface at a distal end of the stator lug.

9. The system of any of claims 1 to 7, where each of the plurality of stator lugs comprises a tip surface having a radii at a distal end of the stator lug.

10. The system of any of claims 1 to 7, where each of the plurality of stator lugs comprises a tip surface having a chamfer at a distal end of the stator lug.

## Patentansprüche

1. Bremssystem mit mehreren Scheiben, umfassend:
einen ringförmigen Scheibenstapel (38), der überlappende Sätze von Rotorscheiben und Statorscheiben beinhaltet;
ein sich axial erstreckendes Torsionsrohr (24); und
eine Betätigungsvorrichtung, die die Rotorscheiben in Eingriff mit einer axial angrenzenden Statorscheibe axial bewegt;
**dadurch gekennzeichnet, dass**:
jede der Statorscheiben einen inneren Kern (204) beinhaltet, der eine Vielzahl von umlaufend angeordneten Statorlaschen (44) und eine Vielzahl von Statorspalten (210) zwischen inneren Abschnitten der Vielzahl von umlaufend angeordneten Statorlaschen (44) beinhaltet, wobei die Vielzahl von umlaufend angeordneten Statorlaschen (44) die Statorscheiben an dem Torsionsrohr sichert, wobei jede der Vielzahl von umlaufenden Statorlaschen verjüngte Seitenwände auf beiden Seiten des Statorspalts (210) umfasst, die sich einwärts quer zu dem sich axial erstreckenden Torsionsrohr verjüngen, und wobei sich die Vielzahl von Statorspalten (210) mit den verjüngten Seitenwänden mit einer Vielzahl von Statorsplines (36) des sich axial erstreckenden Torsionsrohrs (24) ausrichtet.

2. Bremssystem mit mehreren Scheiben nach Anspruch 1, wobei jede der Vielzahl von umlaufenden Statorlaschen abgeschrägte axiale Kanten umfasst.

3. Bremssystem mit mehreren Scheiben nach Anspruch 2, wobei sich die verjüngten Seitenwände einwärts um 1° bis 45° in Bezug auf eine radiale Achse verjüngen.

4. Bremssystem mit mehreren Scheiben nach Anspruch 2, wobei sich die verjüngten Seitenwände einwärts um 5° bis 15° in Bezug auf eine radiale Achse verjüngen.

5. Bremssystem mit mehreren Scheiben nach Anspruch 2, wobei das Torsionsrohr eine Vielzahl von Statorsplines umfasst, die jeweils eine zugehörige der Vielzahl von Statorlaschen in Eingriff nehmen, um zu verhindern, dass sich die Statorscheiben als Reaktion auf das Anwenden einer Torsion auf die Statorscheiben beim Bremsen drehen.

6. System nach einem der vorhergehenden Ansprüche, wobei die Betätigungsvorrichtung mindestens einen Kolben (26) umfasst, der die Rotorscheiben in Eingriff mit einer axial angrenzenden der Statorscheiben axial bewegt.

7. System nach Anspruch 6, umfassend eine Druckplatte (30) und eine Endplatte (32), die die überlappenden Sätze von Rotorscheiben und Statorscheiben sandwichartig aufnehmen, wobei der mindestens eine Kolben die Druckplatte axial bewegt.

8. System nach einem der vorhergehenden Ansprüche, wobei jede der Vielzahl von Statorlaschen eine planare Spitzenoberfläche an einem distalen Ende der Statorlasche umfasst.

9. System nach Anspruch 1 bis 7, wobei jede der Vielzahl von Statorlaschen eine Spitzenoberfläche mit einem Radius an einem distalen Ende der Statorlasche umfasst.

10. System nach einem der Ansprüche 1 bis 7, wobei jede der Vielzahl von Statorlaschen eine Spitzenoberfläche mit einer Abschrägung an einem distalen Ende der Statorlasche umfasst.

## Revendications

1. Système de frein à disques multiples, comprenant :
une pile de disques annulaires (38) qui comporte des ensembles entrelacés de disques de rotor et de disques de stator ;
un tube de torsion s'étendant axialement (24) ; et
un actionneur qui déplace axialement les disques de rotor en prise avec un disque de stator axialement adjacent ;
**caractérisé en ce que** :
chacun des disques de stator comporte un noyau interne (204) qui comporte une pluralité d'ergots de stator agencés circonférentiellement (44) et une pluralité d'espaces de stator (210) entre les parties internes de la pluralité d'ergots de stator agencés circonférentiellement (44), dans lequel la pluralité d'ergots de stator agencés circonférentiellement (44) fixent les disques de stator au tube de torsion, dans lequel chacun de la pluralité d'ergots de stator circonférentiels comprend des parois latérales coniques des deux côtés de l'espace de stator (210) qui se rétrécissent vers l'intérieur transversalement au tube de torsion s'étendant axialement, et dans lequel la pluralité d'espaces de stator (210) avec les parois latérales coniques s'alignent avec une pluralité de cannelures de stator (36) du tube de torsion s'étendant axialement (24).

2. Système de frein à disques multiples selon la revendication 1, dans lequel chacun de la pluralité d'ergots de stator circonférentiels comprend des bords axiaux biseautés.

3. Système de frein à disques multiples selon la revendication 2, dans lequel les parois latérales coniques se rétrécissent vers l'intérieur de 1° à 45° par rapport à un axe radial.

4. Système de frein à disques multiples selon la revendication 2, dans lequel les parois latérales coniques se rétrécissent vers l'intérieur de 5° à 15° par rapport à un axe radial.

5. Système de frein à disques multiples selon la revendication 2, dans lequel le tube de torsion comprend une pluralité de cannelures de stator qui viennent chacune en prise avec un ergot associé de la pluralité d'ergots de stator pour empêcher les disques de stator de tourner en réponse à une torsion appliquée aux disques de stator pendant le freinage.

6. Système selon une quelconque revendication précédente, dans lequel l'actionneur comprend au moins un piston (26) qui déplace axialement les disques de rotor en prise avec un disque axialement adjacent des disques de stator.

7. Système selon la revendication 6, comprenant une plaque de pression (30) et une plaque d'extrémité (32) qui prennent en sandwich les ensembles entrelacés de disques de rotor et de disques de stator, où l'au moins un piston déplace axialement la plaque de pression.

8. Système selon une quelconque revendication précédente, dans lequel chacun de la pluralité d'ergots de stator comprend une surface de pointe plane au niveau d'une extrémité distale de l'ergot de stator.

9. Système selon l'une quelconque des revendications 1 à 7, dans lequel chacun de la pluralité d'ergots de stator comprend une surface de pointe ayant un rayon au niveau d'une extrémité distale de l'ergot de stator.

10. Système selon l'une quelconque des revendications 1 à 7, dans lequel chacun de la pluralité d'ergots de stator comprend une surface de pointe ayant un chanfrein au niveau d'une extrémité distale de l'ergot de stator.
